# EUROPEAN PATENT SPECIFICATION

(11) **EP 3 352 156 B1**
(45) Date of publication and mention of the grant of the patent: **27.11.2019**
(21) Application number: 18152182.4
(22) Date of filing: 17.01.2018
(51) Int. Cl.: B29K 77/00, B29K 307/04, B33Y 80/00, B33Y 50/00, B29C 64/386, G09B 23/28, G09B 23/30

(54) **THREE-DIMENSIONAL RIBS FOR CRASH TEST DUMMY**
3D RIPPEN FÜR CRASHTEST DUMMY
CÔTES 3D POUR MANNEQUIN D' ESSAI DE COLLISION

(30) Priority: 23.01.2017 US 201762449525 P; 19.12.2017 US 201715847498
(43) Date of publication of application: 25.07.2018
(73) Proprietor: Humanetics Innovative Solutions, Inc., Plymouth, MI 48170 (US)
(72) Inventor: Beebe, Michael Scott, Norwalk, OH Ohio 44857 (US); Ubom, Ime Victor, Southfield, MI Michigan 48075 (US); Vara, Thomas M., Norwalk, OH Ohio 44857 (US); Kris, Sullenberger, Sandusky, OH Ohio 44870 (US); Burleigh, Mark John, Hemel Hempstead, Hertfordshire HP2 8AW (GB)
(74) Representative: Hoefer & Partner Patentanwälte mbB

(56) References cited:
- WO-A2-02/38039
- US-A1- 2004 126 746
- US-A1- 2012 178 845
- US-A1- 2014 302 306

## Description

### CROSS-REFERENCE TO RELATED APPLICATION(S)

The present application claims the benefit of U.S. Provisional Patent Application Serial No. 62/449,525, filed January 23, 2017.

### BACKGROUND OF THE INVENTION

### 1. Field of the Invention

The present invention relates generally to crash test dummies and, more particularly, to three-dimensional ribs and a method of three-dimensional printing of ribs for a crash test dummy.

### 2. Description of the Related Art

Automotive, aviation, and other vehicle manufacturers conduct a wide variety of collision testing to measure the effects of a collision on a vehicle and its occupants. Through collision testing, a vehicle manufacturer gains valuable information that can be used to improve the vehicle, authorities examine vehicles to submit type approval and consumer organizations provide information on vehicle safety ratings to the public.

Collision testing often involves the use of anthropomorphic test devices, better known as "crash test dummies", to estimate a human's injury risk. The dummy must possess the general mechanical properties, dimensions, masses, joints, and joint stiffness of the humans of
interest. In addition, they must possess sufficient mechanical impact response similitude and sensitivity to cause them to interact with the vehicle's interior in a human-like manner.

The crash test dummy typically includes a head assembly, spine assembly (including neck), rib cage assembly, abdomen, pelvis assembly, right and left arm assemblies, and right and left leg assemblies. Generally, the rib cage assembly includes a plurality of ribs. The ribs are typically connected to the spine assembly.

Three-dimensional (3D) printers and rapid prototyping (RP) systems are currently used primarily to quickly produce objects and prototype parts from 3D computer-aided design (CAD) tools. Most RP systems use an additive, layer-by-layer approach to building parts by joining liquid, powder, or sheet materials to form physical objects. The data referenced in order to create the layers is generated from a CAD system using thin, horizontal cross-sections of a CAD model.

Currently, the ribs of the crash test dummy use "free layer" damping. This type of construction glues damping material to the inside of a standard 1095 steel band to create the rib. However, it is desirable to make ribs that are more human-like and to improve biofidelity. Thus, there is a need in the art for new ribs having different materials made by a three-dimensional printing process for a crash test dummy to improve biofidelity.

PCT publication WO 02/38039 discloses a surgical training device simulating human tissue structure using a layer of elastomeric material reinforced with a fibrous material. The surgical trainer includes multiple layers of tissue for practicing various surgical skills. Underlying the tissue, the device includes simulated organs within an abdominal cavity that may be filled with fluids to increase the trainer's realism.

US Patent Application 2004/126746 discloses a surgical trainer having a simulated human tissue structure made of an elastomeric composition, at least one reinforcing layer of a fibrous material, and at least one flexible electrical circuit.

### SUMMARY OF THE INVENTION

The invention provides a three-dimensional rib for a crash test dummy in accordance with claim 1 of the appended claims. The invention further provides a method of making a three-dimensional rib for a crash test dummy in accordance with claim 7 of the appended claims. Accordingly, the present invention provides a three-dimensional rib for a crash test dummy. The rib includes at least two layers of a band material including a mixture of a fibrous based material and a polymer based material and a layer of damping material sandwiched in between the at least two layers of the band material.

Further, the present invention provides a method of making a three-dimensional rib for a crash test dummy. The method includes the step of providing a three-dimensional printer. The method also includes the steps of making a CAD model of the three-dimensional rib and printing, by the three-dimensional printer, the three-dimensional rib with at least two layers of a band material including a mixture of a fibrous based material and a polymer based material and a layer of damping material sandwiched in between the at least two layers of the band material.

Also, the present invention provides a rib cage assembly for a crash test dummy including a plurality of three-dimensional ribs. Each of the three-dimensional ribs includes at least two layers of a band material including a mixture of a fibrous based material and a polymer based material and a layer of damping material sandwiched in between the at least two layers of the band material.

In addition, the present invention provides a crash test dummy including a body and a rib cage assembly operatively attached to the body. The rib cage assembly includes a plurality of three-dimensional ribs. Each of the three-dimensional ribs includes at least two layers of a band material including a mixture of a fibrous based material and a polymer based materials and a layer of damping material sandwiched in between the at least two layers of the band material.

One advantage of the present invention is that a new three-dimensional rib is provided for a crash test dummy. Another advantage of the present invention is that the rib includes a mixture of Kevlar and nylon based materials or carbon fiber and nylon based materials to improve biofidelity. Yet another advantage of the present invention is that a three-dimensional printing process is used to make ribs more humanlike than ever before and to improve biofidelity and reproducibility.

Other features and advantages of the present invention will be readily appreciated, as the same becomes better understood, after reading the subsequent description taken in conjunction with the accompanying drawings.

### BRIEF DESCRIPTION OF THE DRAWINGS

FIG. 1 is a perspective view of one embodiment of a rib cage assembly, according to the present invention, illustrated in operational relationship with a crash test dummy, according to one embodiment of the present invention.
FIG. 2 is a side view of the rib cage assembly illustrated in operational relationship with the crash test dummy of FIG. 1.
FIG. 3 is a top view of one embodiment of a three-dimensional rib, according to the present invention, for the rib cage assembly of FIGS. 1 and 2.
FIG. 4 is a side view of the three-dimensional rib of FIG. 3.
FIG. 5 is a sectional view taken along line 5-5 of FIG. 4.
FIG. 6 is a schematic view of one embodiment of a three-dimensional printing system for printing the three-dimensional ribs of FIGS. 3 through 5.
FIG. 7 is a flowchart of a method, according to the present invention, for three-dimensional printing of the three-dimensional ribs of FIGS. 3 through 5.

### DESCRIPTION OF THE PREFERRED EMBODIMENT(S)

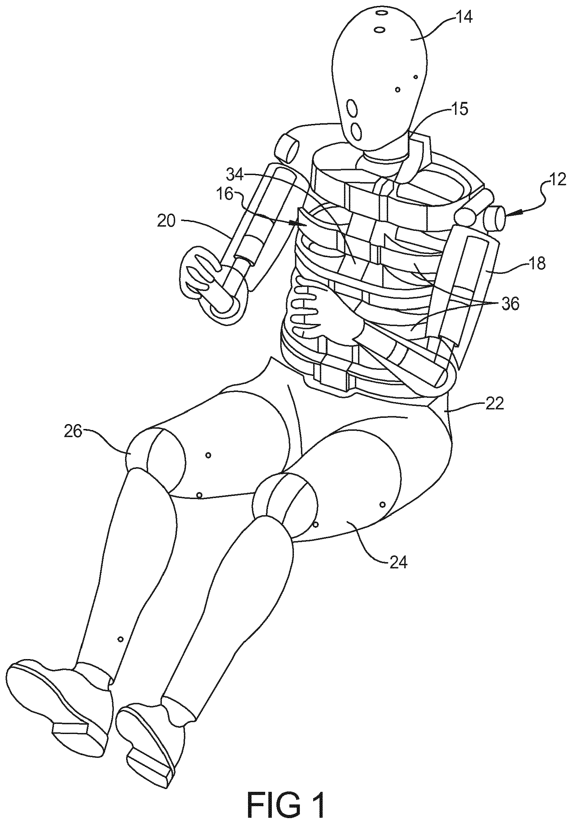

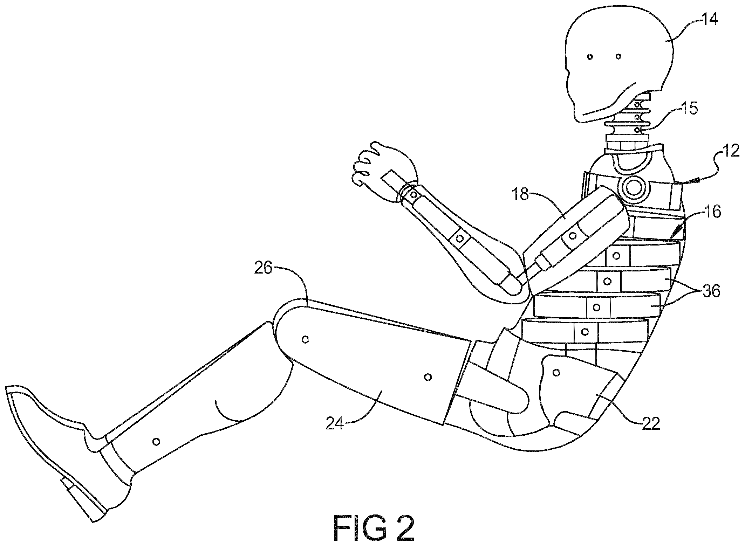

Referring to the drawings and in particular FIGS. 1 and 2, one embodiment of a crash test dummy, according to one embodiment of the present invention, is generally indicated at 12. The crash test dummy 12 is of a fifth percentile (5%) female type and is illustrated in a sitting position. This crash test dummy 12 is used primarily to test the performance of automotive interiors and restraint systems for adult front and rear seat occupants. The size and weight of the crash test dummy 12 are based on anthropometric studies, which are typically done separately by the following organizations, University of Michigan Transportation Research Institute (UMTRI), U.S. Military Anthropometry Survey (ANSUR), and Civilian American and European Surface Anthropometry Resource (CESAR). It should be appreciated that ranges of motions, centers of gravity, and segment masses simulate those of human subjects defined by the anthropometric data.

As illustrated in FIGS. 1 and 2, the crash test dummy 12 includes a head assembly 14, which includes a one-piece plastic skull, an instrumentation core, and a vinyl skin. The instrumentation core is removable for access to head instrumentation contained inside the head assembly 14.

The crash test dummy 12 also includes a spine assembly 15 having an upper end mounted to the head assembly 14 by a nodding block (not shown) and a nodding joint (not shown). The spine assembly 15 has a lower end extending into a torso area of the crash test dummy 12 and is connected to a spine mounting weldment (not shown) by an adapter assembly (not shown).

The crash test dummy 12 includes a torso or rib cage assembly 16 connected to the spine assembly 15. The spine assembly 15 also includes a neck connected to the head assembly 14 and a spine box (not shown) connected to the neck. The neck has a lower end connected to by a suitable attachment such as one or more fasteners (not shown) to the spine box. It should be appreciated that the fasteners threadably engage apertures (not shown) in the spine box to secure the neck to the spine box. The crash test dummy 12 also has a pair of arm assemblies including a right arm assembly 18 and a left arm assembly 20, which are attached to the crash test dummy 12. The left arm assembly 20 includes a clavicle link (not shown), which connects a clavicle (not shown) to the top of the spine assembly 15. It should be appreciated that the right arm assembly 18 is constructed in a similar manner.

As illustrated in the FIGS. 1 and 2, a lower end of the lumbar spine is connected to a lumbar-thoracic adapter (not shown), which is connected to a lumbar to pelvic adapter (not shown). The crash test dummy 12 includes a pelvis assembly 22 connected to the adapter. The crash test dummy 12 also includes a right leg assembly 24 and a left leg assembly 26, which are attached to the pelvis assembly 22. It should be appreciated that various components of the crash test dummy 12 are covered in a urethane, PVC, or Acrylic skin such as a flesh and skin assembly (not shown) for improved coupling with the skeleton of the crash test dummy 12. It should also be appreciated that a lifting ring (not shown) may be attached to the head assembly 14 for lifting the crash test dummy 12 into and out of test fixtures and vehicles.

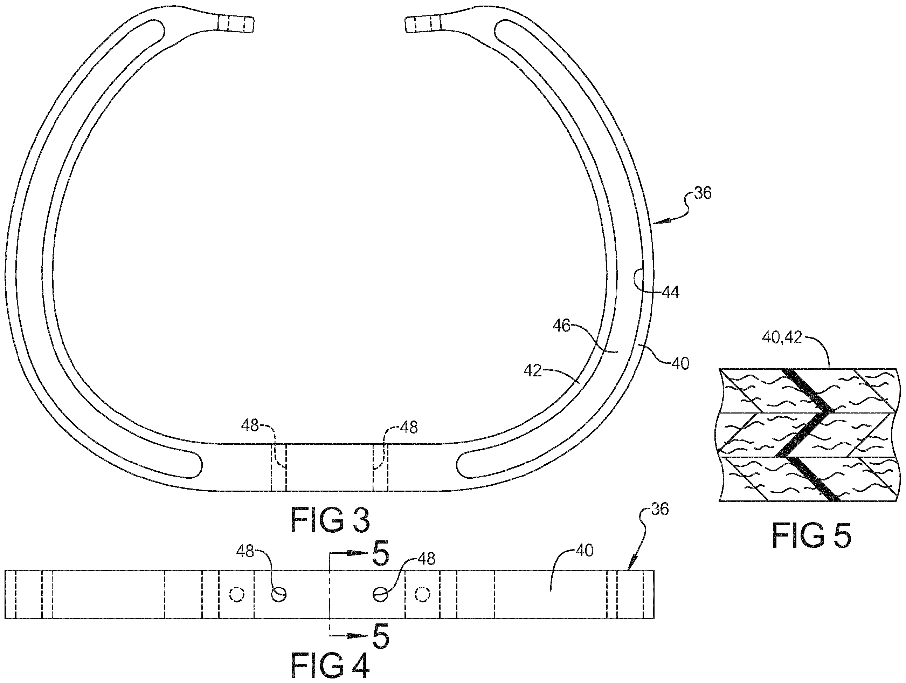

Referring to FIGS. 1 and 2, the rib cage assembly 16 includes one or more three-dimensional ribs 36, according to one embodiment of the present invention. The ribs 36 extend between the spine box and a sternum 34. As illustrated in one embodiment in FIGS. 3-5 for a rib #3, the ribs 36 are generally arcuate and rectangular in shape, but may be any suitable shape. The ribs 36 are vertically spaced along the spine box and sternum 34. The ribs 36 are connected to the spine box and sternum 34 by a suitable mechanism such as fasteners (not shown).

Each of the ribs 36 has a general "C" shape. Each rib 36 has at least two layers. In one embodiment, each rib 36 has a front layer 40 and a rear layer 42 with an interior 44 spaced therebetween. The front layer 40 and rear layer 42 are made of a band material. The band material includes a mixture of Kevlar®, a registered trademark of DuPont, and nylon based materials or carbon fiber and nylon based materials. Kevlar® is a material formed by combining para-phenylenediamine and terephthaloyl chloride. Aromatic polyamide (aramid) threads are the result. These threads are further refined, by dissolving the threads and spinning them into regular fibers. When woven, Kevlar® forms a strong and flexible material. Nylon is a thermoplastic. Nylon is a generic designation for a family of synthetic polymers, more specifically aliphatic or semi-aromatic polyamides, single substance but the name given to a whole family of very similar materials called polyamides. Different kinds of nylon have different properties. Examples of nylon include nylon 6, nylon 6,12, and nylon 5,10.

Carbon fibers are usually combined with other materials to form a composite. When combined with a plastic resin such as nylon or molded, the carbon fibers forms a carbon-fiber reinforced polymer (often referred to as carbon fiber) which has a very high strength-to-weight ratio, and is extremely rigid although somewhat brittle. The fibers are about 5-10 micrometers in diameter and composed mostly of carbon atoms.

Referring to FIG. 5, each layer 40 and 42 may have one or more layers having a thickness from approximately 2.0 millimeters to approximately 6.0 millimeters, preferably approximately 4.0 millimeters. Each rib 36 may include a layer of damping material 46 disposed or sandwiched in between the layers 40 and 42. The damping material has a thickness from approximately 8.0 millimeters to approximately 10.0 millimeters, preferably approximately 9.5 millimeters. Each rib 36 includes at least one, preferably a plurality of apertures 48 to allow fasteners (not shown) to extend therethrough for connection of the rib cage assembly 16 to the crash test dummy 12. The printable materials for the damping material are commercially available from Stratasys Ltd., 7665 Commerce Way, Eden Prairie, Minnesota, 55344 and the printable materials for the band material are available from Markforged, 14 Remington Street Suite 103, Cambridge Massachusetts 02138. It should be appreciated that the materials are either FDM Thermoplastics or Polyjet Photopolymers of Stratasys Ltd. It should also be appreciated that the dimensions and thicknesses of the ribs 36 will vary depending on the crash test dummy. It should also be appreciated that this process could be applied to other rib designs as well, for example, bigger, smaller, and different shapes.

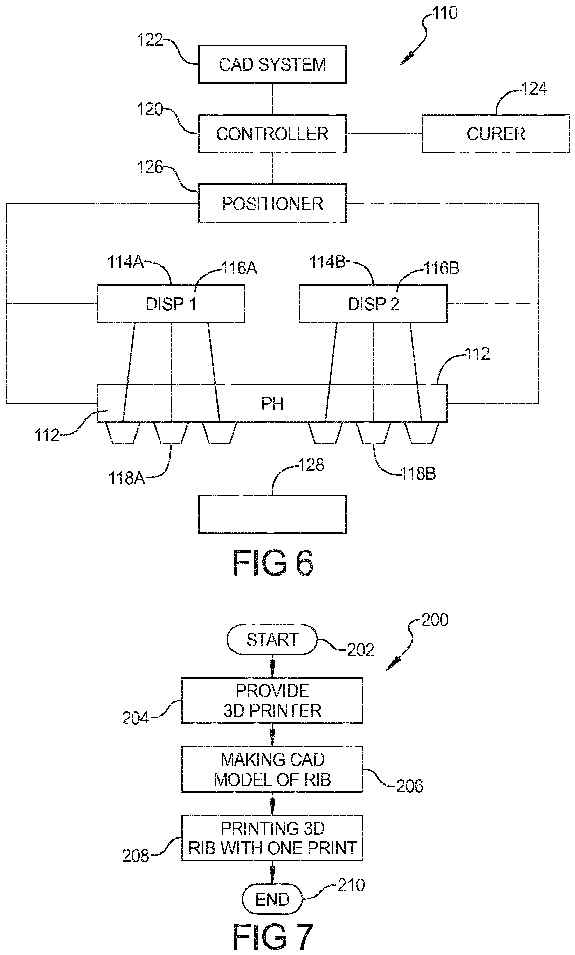

Referring to FIG. 6, a three-dimensional printer or printing system, generally designated 100, includes one or more printing heads 112, and at least two dispensers 114 and individually referenced 114a and 114b, containing printable materials, generally referenced 116 and individually referenced 116a and 116b, respectively. It should be appreciated that other components, and other sets of components, may be used.

The printing head 112 has a plurality of ink-jet type nozzles 118, through which printable materials 116a and 116b are jetted. In one embodiment, the first dispenser 114a is connected to a first set of nozzles 118a, and second dispenser 114b is connected to a second set of nozzles 118b. Thus first printable material 116a is jetted through the nozzles 118a, and the second printable material 116b is jetted through nozzles 118b. In another embodiment (not shown), the three-dimensional printing system 110 may include at least two printing heads 112. The first printing head 112 is connected to first dispenser 114a and is used to jet first printable material 116a; and the second printing head 112 is connected to second dispenser 114b is used to jet second printable material 116b.

The three-dimensional printing system 110 further includes a controller 120, a Computer Aided Design (CAD) system 122, a curing unit 124, and optionally a positioning apparatus 126. The controller 120 is coupled to the CAD system 122, curing unit 124, positioning apparatus 126, printing head 112 and each of the dispensers 114. It should be appreciated that control may be effected by other units than shown, such as one or more separate units.

The three-dimensional rib 36 is built in layers, the depth of each layer typically being controllable by selectively adjusting the output from each of the ink-jet nozzles 118.

By combining or mixing materials from each of the dispensers 114, wherein each dispenser 114 contains printable material having a different properties such as hardness, it is possible to adjust and control the hardness of the material forming the three-dimensional rib 36 being produced. Thus, by combining the first and second interface materials being output from each of the dispensers 114, respectively, different parts of the three-dimensional rib 36 having a different modulus of elasticity and a different strength may be produced. It should be appreciated that such a three-dimensional printing system is disclosed in U.S. Patent No. 8,481,241 to Napadensky et al..

Referring to FIG. 7, the present invention provides a method 200, according to one embodiment of the present invention, of making the three-dimensional rib 36 for the crash test dummy 12. The method 200 starts in bubble 202 and advances to block 204. In block 204, the method 200 includes the step of providing a three-dimensional printer or printing system 110. The method 200 advances to block 206 and includes the step of making a CAD model of the rib 36. In one embodiment, a CAD model of the rib 36 was made to allow the 3D printer to print in one model. The method 200 advances to block 208 and includes the step of printing, by the three-dimensional printer or printing system 110, the rib 36 with at least two layers 40, 42 of a band material including a mixture of Kevlar and nylon based materials or carbon fiber and nylon based materials and a layer 46 of damping material sandwiched in between the layers 40, 42 of the band material in one printing.

Accordingly, rib 36 and the rib cage assembly 16 of the present invention has ribs 36 that are even more humanlike than in the past with improved biofidelity. Due to the advantage of the three-dimensional printing of two different materials in one printing, the ribs 36 can include hysteresis or damping that can be increased to make the ribs 36 more humanlike than ever before.

The present invention has been described in an illustrative manner. It is to be understood that the terminology, which has been used, is intended to be in the nature of words of description rather than of limitation.

Many modifications and variations of the present invention are possible in light of the above teachings. Therefore, the present invention may be practiced other than as specifically described.

## Claims

1. A three-dimensional rib (36) for a crash test dummy (12) **characterized in that** the rib comprises:
at least two layers of a band material including a front layer (40) and a rear layer (42) each made of a mixture of a fibrous based material and a polymer based material with an interior (44) spaced therebetween; and
a layer of damping material (46) sandwiched in the interior (44) between said at least two layers of said band material.

2. A three-dimensional rib (36) as set forth in claim 1 wherein said fibrous based material is one of Kevlar and carbon fiber.

3. A three-dimensional rib (36) as set forth in any one of claims 1 or 2 wherein said polymer based material is nylon.

4. A three-dimensional rib (36) as set forth in any one of claims 1-3 wherein each of said at least two layers of said band material has a thickness from approximately 2.0 millimeters to approximately 6.0 millimeters.

5. A three-dimensional rib (36) as set forth in any one of claims 1-4 wherein said layer of said damping material (46) has a thickness from approximately 8.0 millimeters to approximately 10.0 millimeters.

6. A three-dimensional rib (36) as set forth in any one of claims 1-5 wherein said layer of damping material (46) has a thickness greater than a thickness of each of said at least two layers of said band material.

7. A method of making three-dimensional rib (36) for a crash test dummy (12), said method comprising the steps of:
providing a three-dimensional printer;
making a CAD model of a three-dimensional rib (36) for the crash test dummy (12);
printing, by the three-dimensional printer, the three-dimensional rib (36) with at least two layers of a band material including a front layer (40) and a rear layer (42) each made of a mixture of a fibrous based material and a polymer based material with an interior (44) spaced therebetween and a layer of damping material (46) sandwiched in the interior (44) between the layers of the band material.

8. A method as set forth in claim 7 wherein the fibrous based material is one of Kevlar or carbon fiber.

9. A method as set forth in any one of claims 7 or 8 wherein the polymer based material is nylon.

10. A method as set forth in any one of claims 7-9 wherein said step of printing comprises printing the at least two layers of the band material in one printing and printing the layer of damping material (46) in another printing.

11. A method as set forth in any one of claims 7-10 wherein the layer of the damping material (46) has a thickness from approximately 8.0 millimeters to approximately 10.0 millimeters.

12. A method as set forth in any one of claims 7-11 wherein each of the at least two layers of the band material has a thickness from approximately 2.0 millimeters to approximately 6.0 millimeters.

13. A rib cage assembly including a plurality of three-dimensional ribs (36) as set forth in any one of claims 1-6.

14. A crash test dummy comprising:
a body; and
a rib cage assembly as set forth in claim 13 operatively attached to said body.

## Patentansprüche

1. Dreidimensionale Rippe (36) für einen Crashtest-Dummy (12), **dadurch gekennzeichnet, dass** die Rippe aufweist:
- zumindest zwei Schichten eines Bandmaterials mit einer vorderen Schicht (40) und einer hinteren Schicht (42), wobei jede aus einer Mischung eines Materials auf Faserbasis und eines Materials auf Polymerbasis mit einem dazwischen beabstandeten Innenraum (44) hergestellt ist; und
- eine Schicht aus Dämpfungsmaterial (46), die im Inneren (44) zwischen den zumindest zwei Schichten des Bandmaterials angeordnet ist.

2. Dreidimensionale Rippe (36) nach Anspruch 1, wobei das Material auf Faserbasis eine Kevlar-Faser oder Kohlenstofffaser ist.

3. Dreidimensionale Rippe (36) nach einem der Ansprüche 1 oder 2, wobei das Material auf Polymerbasis Nylon ist.

4. Dreidimensionale Rippe (36) nach einem der Ansprüche 1 bis 3, wobei jede von den zumindest zwei Schichten des Bandmaterials eine Dicke von ungefähr 2,0 Millimeter bis ungefähr 6,0 Millimeter aufweist.

5. Dreidimensionale Rippe (36) nach einem der Ansprüche 1 bis 4, wobei die Schicht aus Dämpfungsmaterial (46) eine Dicke von ungefähr 8,0 Millimeter bis ungefähr 10,0 Millimeter aufweist.

6. Dreidimensionale Rippe (36) nach einem der Ansprüche 1 bis 5, wobei die Schicht aus Dämpfungsmaterial (46) eine Dicke aufweist, die größer als eine Dicke von jeder der zumindest zwei Schichten des Bandmaterials ist.

7. Verfahren zum Herstellen einer dreidimensionalen Rippe (36) für einen Crashtest-Dummy (12), wobei das Verfahren die Schritte aufweist:
- Vorsehen eines dreidimensionalen Druckers;
- Herstellen eines CAD-Modells einer dreidimensionalen Rippe (36) für den Crashtest-Dummy (12);
- Drucken der dreidimensionalen Rippe (36) durch den dreidimensionalen Drucker mit zumindest zwei Schichten eines Bandmaterials mit einer vorderen Schicht (40) und einer hinteren Schicht (42), wobei jede aus einer Mischung eines Materials auf Faserbasis und eines Materials auf Polymerbasis mit einem dazwischen beabstandeten Innenraum (44) hergestellt ist, und mit einer Schicht aus Dämpfungsmaterial (46), die im Inneren (44) zwischen den zumindest zwei Schichten des Bandmaterials angeordnet ist.

8. Verfahren nach Anspruch 7,
- wobei das Material auf Faserbasis eine Kevlar-Faser oder Kohlenstofffaser ist.

9. Verfahren nach einem der Ansprüche 7 oder 8, wobei das Material auf Polymerbasis Nylon ist.

10. Verfahren nach einem der Ansprüche 7 bis 9, wobei der Schritt zum Drucken ein Drucken der zumindest zwei Schichten des Bandmaterials in einem Druckvorgang und ein Drucken der Schicht aus Dämpfungsmaterial (46) in einem anderen Druckvorgang aufweist.

11. Verfahren nach einem der Ansprüche 7 bis 10, wobei die Schicht aus Dämpfungsmaterial (46) eine Dicke von ungefähr 8,0 Millimeter bis ungefähr 10,0 Millimeter aufweist.

12. Verfahren nach einem der Ansprüche 7 bis 11, wobei jede von den zumindest zwei Schichten des Bandmaterials eine Dicke von ungefähr 2,0 Millimeter bis ungefähr 6,0 Millimeter aufweist.

13. Brustkorbanordnung mit einer Mehrzahl von dreidimensionalen Rippen (36) nach einem der Ansprüche 1 bis 6.

14. Crashtest-Dummy, umfassend:
- einen Körper; und
- eine Brustkorbanordnung nach Anspruch 13, die funktionsfähig am Körper befestigt ist.

## Revendications

1. Côte tridimensionnelle (36) pour un mannequin d'essai de choc (12) **caractérisée en ce que** la côte comprend :
au moins deux couches d'un matériau en bande comportant une couche avant (40) et une couche arrière (42) constituées chacune d'un mélange d'un matériau à base de fibres et d'un matériau à base de polymère avec une partie intérieure (44) espacée entre celles-ci ; et
une couche de matériau d'amortissement (46) prise en tenaille dans la partie intérieure (44) entre lesdites au moins deux couches dudit matériau en bande.

2. Côte tridimensionnelle (36) telle que définie dans la revendication 1, dans laquelle ledit matériau à base de fibres est l'un parmi le Kevlar et la fibre de carbone.

3. Côte tridimensionnelle (36) telle que définie dans l'une quelconque des revendications 1 et 2, dans laquelle ledit matériau à base de polymère est du nylon.

4. Côte tridimensionnelle (36) telle que définie dans l'une quelconque des revendications 1 à 3, dans laquelle chacune desdites au moins deux couches dudit matériau en bande a une épaisseur allant d'environ 2,0 millimètres à environ 6,0 millimètres.

5. Côte tridimensionnelle (36) telle que définie dans l'une quelconque des revendications 1 à 4, dans laquelle ladite couche dudit matériau d'amortissement (46) a une épaisseur allant d'environ 8,0 millimètres à environ 10,0 millimètres.

6. Côte tridimensionnelle (36) telle que définie dans l'une quelconque des revendications 1 à 5, dans laquelle ladite couche de matériau d'amortissement (46) a une épaisseur supérieure à une épaisseur de chacune desdites au moins deux couches dudit matériau en bande.

7. Procédé de fabrication d'une côte tridimensionnelle (36) pour un mannequin d'essai de choc (12), ledit procédé comprenant les étapes consistant :
à fournir une imprimante tridimensionnelle ;
à réaliser un modèle CAD d'une côte tridimensionnelle (36) pour le mannequin d'essai de choc (12) ;
à imprimer, par l'imprimante tridimensionnelle, la côte tridimensionnelle (36) avec au moins deux couches d'un matériau en bande comportant une couche avant (40) et une couche arrière (42) constituées chacune d'un mélange d'un matériau à base de fibres et d'un matériau à base de polymère avec une partie intérieure (44) espacée entre celles-ci et une couche de matériau d'amortissement (46) prise en tenaille dans la partie intérieure (44) entre les couches du matériau en bande.

8. Procédé tel que défini dans la revendication 7, dans lequel le matériau à base de fibres est l'un parmi le Kevlar et la fibre de carbone.

9. Procédé tel que défini dans l'une quelconque des revendications 7 et 8, dans lequel le matériau à base de polymère est du nylon.

10. Procédé tel que défini dans l'une quelconque des revendications 7 à 9, dans lequel ladite étape d'impression comprend l'impression des au moins deux couches du matériau en bande dans une impression et l'impression de la couche de matériau d'amortissement (46) dans une autre impression.

11. Procédé tel que défini dans l'une quelconque des revendications 7 à 10, dans lequel la couche du matériau d'amortissement (46) a une épaisseur allant d'environ 8,0 millimètres à environ 10,0 millimètres.

12. Procédé tel que défini dans l'une quelconque des revendications 7 à 11, dans lequel chacune des au moins deux couches du matériau en bande a une épaisseur allant d'environ 2,0 millimètres à environ 6,0 millimètres.

13. Ensemble de cage thoracique comportant une pluralité de côtes tridimensionnelles (36) telles que définies dans l'une quelconque des revendications 1 à 6.

14. Mannequin d'essai de choc comprenant :
un corps ; et
un ensemble de cage thoracique tel que défini dans la revendication 13 fixé de manière fonctionnelle audit corps.
